# EUROPEAN PATENT SPECIFICATION

(11) **EP 1 742 505 B1**
(45) Date of publication and mention of the grant of the patent: **25.06.2014**
(21) Application number: 05730677.1
(22) Date of filing: 18.04.2005
(51) Int. Cl.: G10K 9/122, G10K 9/22, G01S 7/521, G01S 15/93

(54) **ULTRASONIC SENSOR**
ULTRASCHALLSENSOR
CAPTEUR ULTRASONORE

(30) Priority: 26.04.2004 JP 2004130196
(43) Date of publication of application: 10.01.2007
(73) Proprietor: Panasonic Corporation, Osaka 571-8501 (JP)
(72) Inventor: MATSUMOTO, Taku c/o MURATA MANUFACTURING CO., LTD., Kyoto 6178555 (JP); OTA, Junshi, c/o MURATA MANUFACTURING CO., LTD., Kyoto 6178555 (JP)
(74) Representative: Appelt, Christian W.
(86) International application number: PCT/JP2005/007406
(87) International publication number: WO 2005/104615

(56) References cited:
- JP-A- 8 169 288
- JP-A- 10 206 529
- JP-A- 2004 097 851
- US-A- 4 437 032
- US-A1- 2003 121 331

## Description

### Technical Field

The present invention relates to an ultrasonic sensor that is used, for example, as back sonar of automobiles.

### Background Art

An ultrasonic sensor is a sensor that uses ultrasonic waves to perform sensing. The ultrasonic sensor has a piezoelectric transducer, which intermittently sends ultrasonic waves (transmission waves) and receives reflected waves (reception waves) from an object. The distance between the ultrasonic sensor and the object can be measured with the transmission/reception wave signals. The piezoelectric transducer is disposed on the inner bottom surface of a bottom part of a tubular container. The tubular container is mounted in a supporting member such that the outer bottom surface, which serves as a vibrating surface, of the bottom part is positioned substantially opposite the object.

Known ultrasonic sensors include a single piezoelectric device acting both as a transmitter and a receiver. In this case, as an ultrasonic sensor and an object approach each other, reverberations of one of a transmission signal and a reception signal affect the other signal more strongly and cause a problem in that the object cannot be detected. In a configuration proposed to solve this problem, two piezoelectric devices, one acting as a transmitter and the other as a receiver, are disposed in respective tubular containers. However, while the effects of reverberating vibrations can be reduced, this configuration has led to the problems of the increased number of components and assembly costs.

Japanese Unexamined Patent Application Publication No. 10-206529 proposes an ultrasonic transmitting-receiving apparatus in which two piezoelectric devices are disposed in respective tubular containers that are connected together to form an integral housing. This apparatus is configured such that reverberations of both transmission and reception signals are prevented from affecting each other.

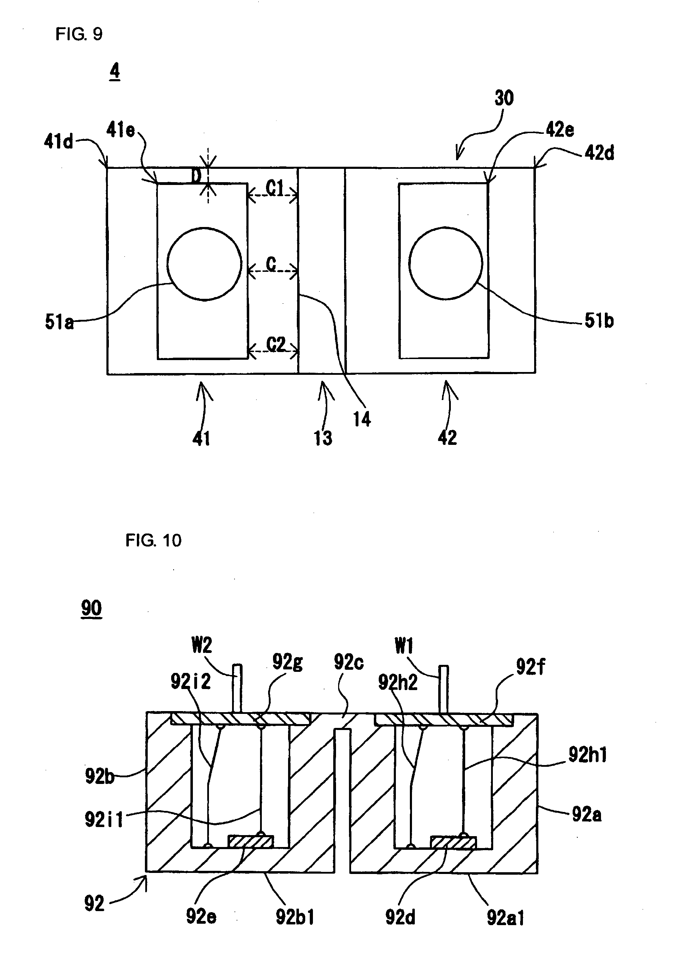

Fig. 10 is a cross-sectional view showing an ultrasonic sensor of the ultrasonic transmitting-receiving apparatus according to Japanese Unexamined Patent Application Publication No. 10-206529. In an ultrasonic sensor 90, two tubular containers 92a and 92b and a connecting part 92c that connects the two tubular containers 92a and 92b form an integral housing 92 having conductivity. An end of the ultrasonic sensor 90 is closed by bottom parts 92a1 and 92b1 acting as vibrating surfaces, while openings at the other end of the ultrasonic sensor 90 are covered with circuit boards 92f and 92g. The two tubular containers 92a and 92b are connected to each other, through the connecting part 92c, at side portions near the openings of the tubular containers 92a and 92b. Piezoelectric devices 92d and 92e are disposed on the respective inner bottom surfaces of the bottom parts 92a1 and 92b1 of the housing 92. Shielded wires W1 and W2 are connected to the circuit boards 92f and 92g, respectively. Live lead wires 92h1 and 92i1 extending from the circuit boards 92f and 92g, respectively, are connected to the piezoelectric devices 92d and 92e, respectively. Earth lead wires 92h2 and 92i2 extending from the circuit boards 92f and 92g, respectively, are connected to portions of the bottom parts 92a1 and 92b1, respectively, the portions being adjacent to the piezoelectric devices 92d and 92e.

The housing configuration of the ultrasonic sensor according to Japanese Unexamined Patent Application Publication No. 10-206529 allows the tubular containers to be connected together, through the connecting part 92c, at the side portions near the openings where there are fewer vibrations. Therefore, reverberations caused by one of the piezoelectric devices cannot easily affect the other piezoelectric device. A possible reason for which there are fewer vibrations in the side portions near the openings is that the openings, which are covered with the circuit boards 92f and 92g, are subjected to restraining forces of the circuit boards 92f and 92g.

US 2003/0121331 A1 discloses an ultrasound sensor comprising an integral housing including a plurality of tubular containers and piezoelectric devices disposed on the bottom surfaces of the tubular containers. The side parts of the tubular containers are connected to each other through a connecting part at portions adjacent to the bottom parts of the tubular containers.

### Disclosure of Invention

It is originally preferable that general ultrasonic sensors have a housing configuration that can minimize interference with vibrations created by piezoelectric transducers. However, as in Japanese Unexamined Patent Application Publication No. 10-206529, covering the openings of the tubular containers with the circuit boards or the like causes interference with such vibrations. If an ultrasonic sensor has a configuration in which openings are not covered, side parts of tubular containers vibrate most strongly at portions near the openings, in response to the vibrations of piezoelectric transducers. Therefore, if tubular containers are connected to each other at side portions near the openings, it becomes more likely that reverberations of vibrations created by one piezoelectric device affect the other piezoelectric device.

Accordingly, an object of the present invention is to provide an ultrasonic sensor with a housing configuration that can solve the problems described above.

An ultrasonic sensor of the present invention has an integral housing including a plurality of tubular containers that are open at one end and closed by bottom parts at the other end and have side parts extending from the one end to the other end, and at least one connecting part that connects the plurality of tubular containers; and piezoelectric devices disposed on respective inner bottom surfaces of the respective bottom parts of the plurality of tubular containers. In the housing, the side parts of the plurality of tubular containers are connected to each other, through the connecting part, at portions adjacent to the bottom parts of the tubular containers, with outer bottom surfaces of the respective bottom parts of the plurality of tubular containers being flush with each other. The housing further includes an elastic member that supports the housing.

In another specific aspect of the ultrasonic sensor of the present invention, the resonant frequency of the connecting part differs from the drive frequency of the piezoelectric devices.

In another specific aspect of the ultrasonic sensor of the present invention, in each of the tubular containers, the thickness of a side portion facing toward another tubular container connected through the connecting part is greater than the thickness of a side portion orthogonal to the side portion facing toward the another tubular container.

In another specific aspect of the ultrasonic sensor of the present invention, the outline of the outer bottom surface of each of the tubular containers is polygonal.

In still another specific aspect of the ultrasonic sensor of the present invention, the outer bottom surfaces of the plurality of tubular containers and an outer surface of the connecting part form a single flat surface.

With the ultrasonic sensor of the present invention, since the plurality of tubular containers are connected to each other at side portions that are adjacent to the bottom parts where the amount of displacement caused by the vibrations of the piezoelectric transducers is smallest, the reverberations of vibrations created by a piezoelectric transducer cannot easily affect another piezoelectric transducer through the connecting part. This allows an accurate detection of an object even if it is located at a close distance from the ultrasonic sensor.

By varying the resonant frequency of the connecting part from the drive frequency of the piezoelectric devices, reverberations caused by the vibrations of the piezoelectric transducers can be further reduced.

Moreover, in each tubular container, by setting the thickness of a side portion facing toward an adjacent tubular container greater than the thickness of a side portion that is orthogonal to the side portion facing toward the adjacent tubular container, reverberations caused by the vibrations of the piezoelectric transducers can be further reduced. It is particularly preferable if the outline of the outer bottom surface of each tubular container is polygonal, for example, rectangular, since a side portion facing toward an adjacent tubular container is in contact with the connecting part along a straight line and can be formed to have a uniform thickness greater than the thickness of a side portion distant from the connecting part, and thus reverberations can be reduced.

Moreover, making the outer bottom surfaces of the bottom parts of the plurality of tubular containers and the connecting part adjacent to the outer bottom surfaces to form a single flat surface is preferable in terms of appearance since, for example, if the ultrasonic sensor is mounted in a bumper of a vehicle, an even surface can be exposed to the outside.

### Brief Description of the Drawings

Fig. 1 is an external perspective view of an ultrasonic sensor 1 according to a first embodiment of the present invention.
Fig. 2 is an external perspective view of the ultrasonic sensor 1, as viewed from a different direction.
Fig. 3 is a cross-sectional view of the ultrasonic sensor 1.
Fig. 4(a) is a schematic cross-sectional view showing a vibrating state of an ultrasonic sensor 2, and Fig. 4(b) is a graph showing the amount of displacement of the ultrasonic sensor 2.
Fig. 5 is a partial perspective view of a vehicle 52 with a rear bumper 53 in which the ultrasonic sensor 1 is mounted.
Fig. 6 is a partial cross-sectional view of the vehicle 52.
Fig. 7 is an external perspective view of an ultrasonic sensor 3 according to a second embodiment of the present invention.
Fig. 8 is an external perspective view of an ultrasonic sensor 4 according to a third embodiment of the present invention.
Fig. 9 is a front view of the ultrasonic sensor 3.
Fig. 10 is an external perspective view of the known ultrasonic sensor 90.

### Reference Numerals

- 1 - 4:: ultrasonic sensor
- 10, 20, 30:: housing
- 11, 12, 41, 42:: tubular container
- 11a, 12a:: opening
- 11b, 12b:: side part
- 11c, 12c:: bottom part
- 11d, 12d, 41d, 42d:: outer bottom surface
- 11e, 12e, 41e, 42e:: inner bottom surface
- 13, 33:: connecting part
- 14:: contact line
- 51a, 51b:: piezoelectric device
- 52:: vehicle
- 53:: bumper
- 54:: elastic member

### Best Mode for Carrying Out the Invention

### (First Embodiment)

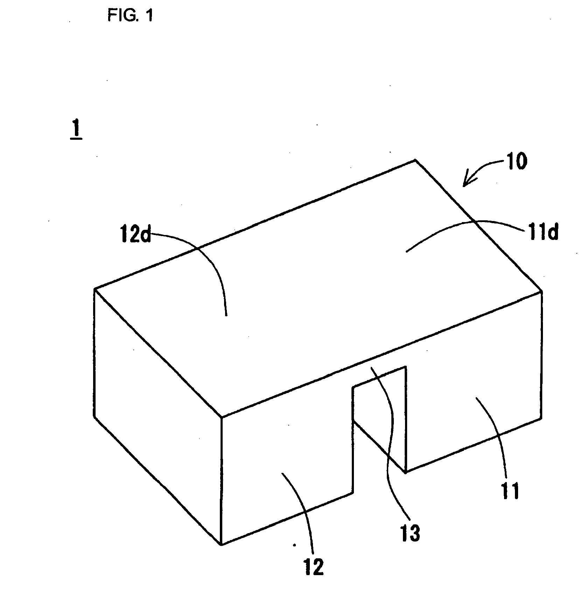

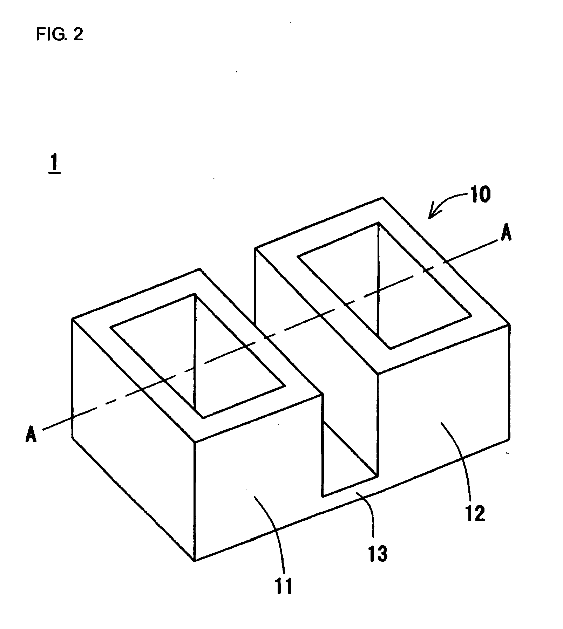

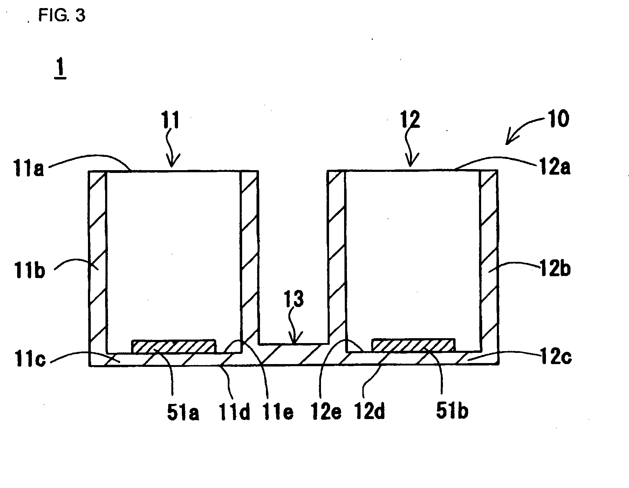

Fig. 1 is an external perspective view of an ultrasonic sensor according to the first embodiment of the present invention. Fig. 2 is an external perspective view showing the ultrasonic sensor 1 in Fig. 1 turned upside down. Fig. 3 is a cross-sectional view taken along line A-A in the ultrasonic sensor 1 shown in Fig. 2. In the ultrasonic sensor 1 of the present embodiment, piezoelectric devices 51a and 51b that create vibrations are disposed inside an aluminum housing 10. In the housing 10, two tubular containers 11 and 12 that are open at one end and closed by bottom parts 11c and 12c at the other end are connected together, through a connecting part 13, at end portions of side parts 11b and 12b of the tubular containers 11 and 12, respectively, the end portions being adjacent to the bottom parts 11c and 12c. In other words, the housing 10 is an integral member including the two tubular containers 11 and 12. The connecting part 13 has the form of a plate having a uniform thickness. The side parts 11b and 12b are also of uniform thickness. As shown in Fig. 1, outer bottom surfaces 11d and 12d of the tubular containers 11 and 12 and an adjacent outer surface of the connecting part 13 are brought together to form a single flat surface. The piezoelectric devices 51a and 51b are disposed on inner bottom surfaces 11e and 12e, respectively, of the respective tubular containers 11 and 12. Lead wires (not shown) are attached to the respective piezoelectric devices 51a and 51b and extend outside the ultrasonic sensor 1 through respective openings 11a and 12a.

The present invention is characterized by the housing configuration in which the side parts of the tubular containers are connected to each other, through the connecting part, near the bottom parts of the tubular containers. The reasons for which this configuration is adopted are as follows.

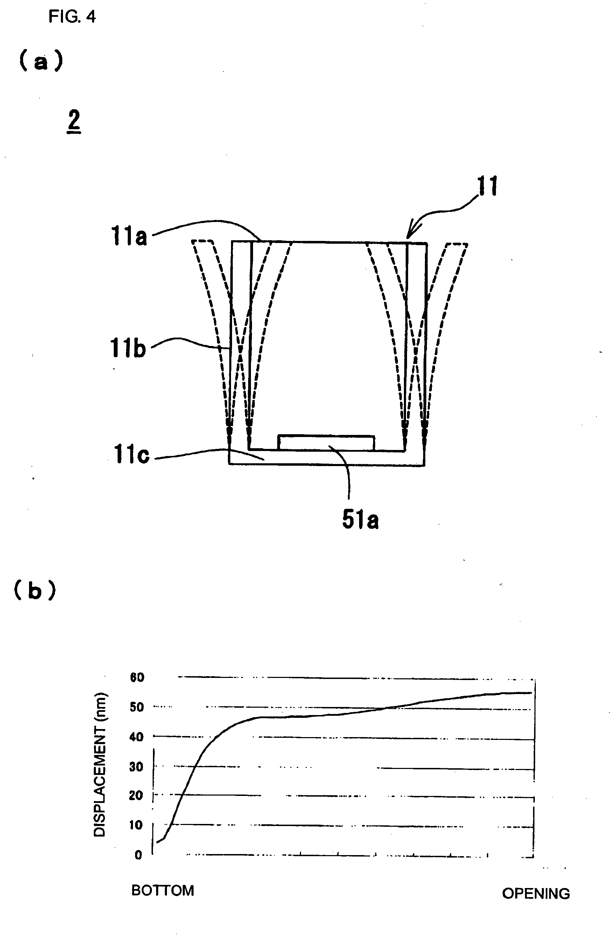

Fig. 4(a) is a schematic cross-sectional view showing a state in which the side part 11b vibrates in response to the drive of the piezoelectric device 51a when a voltage is applied to an ultrasonic sensor 2 having a housing configuration comprised of the single tubular container 11. A power source, lead wires, and the like that are necessary for voltage application are omitted from Fig. 4(a), which schematically illustrates only the piezoelectric device 51a and the housing including the tubular container 11.

Fig. 4(b) is a graph showing the amount of displacement (i.e., the width of horizontal vibrations) of the side part 11b which vibrates in response to the application of a voltage. The horizontal axis represents the position in the side part ranging from the bottom part 11c at zero to an opening 11a. The vertical axis represents the amount of displacement. Fig. 4(a) and Fig. 4(b) show that the amount of displacement increases as the position in the side part 11b approaches the opening 11a. This is because, in the side part 11b, a portion closer to the opening 11a is less affected by the restraining force of the bottom part 11c while a portion closer to the bottom part 11c is more affected by the restraining force of the bottom part 11c and thus is inhibited from vibrating. Therefore, in the present invention, the side parts of the plurality of tubular containers are connected to each other, through the connecting part, at portions near the bottom parts where the amount of displacement of the side parts is small. In the first embodiment, the connecting part 13 is disposed at a position that allows the outer bottom surfaces 11d and 12d, where the amount of displacement is smallest, and the outer surface of the connecting part 13 to form a single flat surface.

The ultrasonic sensor 1 is mounted, for example, in a bumper of a vehicle to serve as back sonar.

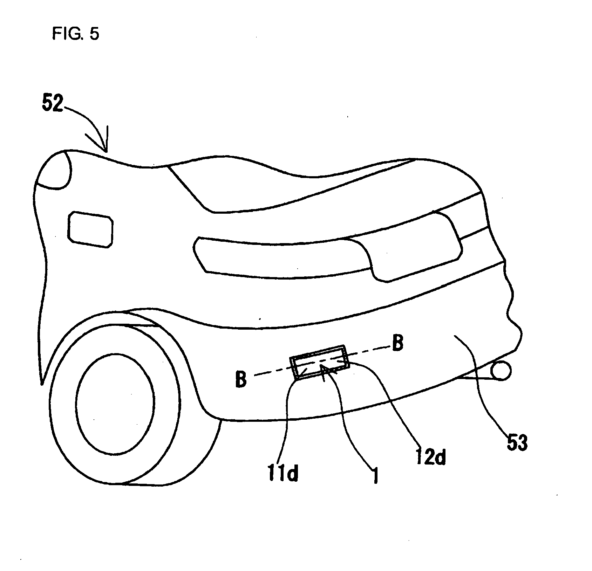

Fig. 5 is a partial perspective view of the vehicle 52 with the rear bumper 53 in which the ultrasonic sensor 1 is mounted. The outer bottom surfaces 11d and 12d of the ultrasonic sensor 1 are exposed to the outside, with the side parts 11b and 12b and openings 11a and 12a embedded in the rear bumper 53.

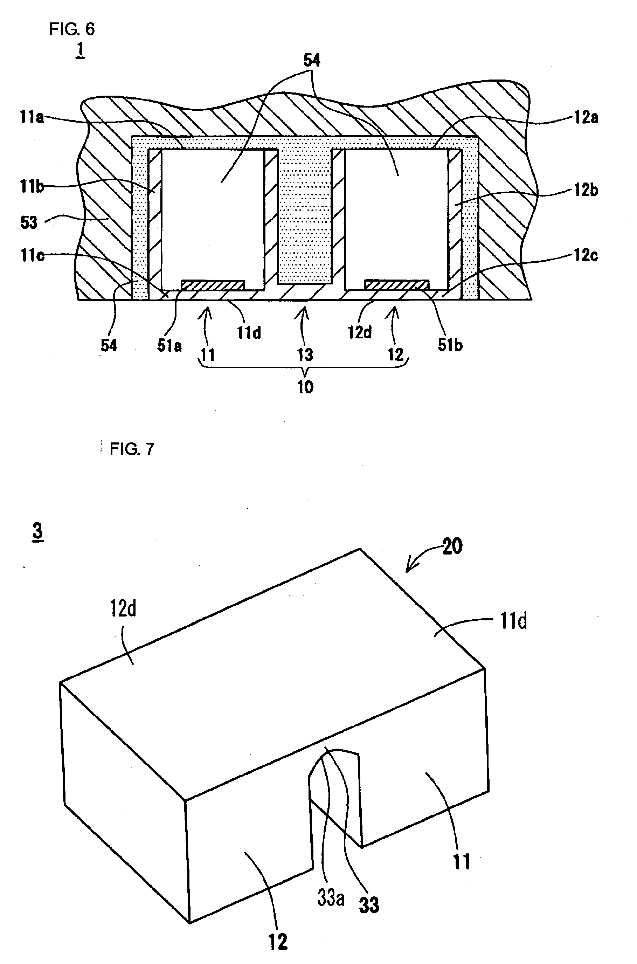

Fig. 6 is a partial cross-sectional view taken along line B-B in the vehicle 52 shown in Fig. 5 and showing the ultrasonic sensor 1 as viewed from above. The side parts 11b and 12b are embedded in the bumper 32 while being covered with an elastic member 54 made of rubber or the like. Supporting the housing 10 by the elastic member 23 in this manner allows the tubular containers 11 and 12 to vibrate freely, with virtually no interference, in response to the drive of the piezoelectric devices 51a and 51b and thus, allows the effects of the present invention to be achieved.

In addition to the functional effects described above, the present invention has the effect of enhancing the appearance of ultrasonic sensors, as the exposed surface of the ultrasonic sensor 1 is a single flat surface.

### (Second Embodiment)

Fig. 7 is an external perspective view of an ultrasonic sensor according to the second embodiment of the present invention. While the connecting part 13 of the first embodiment has the form of a plate of uniform thickness, a connecting part 33 of the present embodiment is partially thin, as the connecting part 33 is provided with a recessed portion 33a. In the tubular containers 11 and 12, the recessed portion 33a is provided on the inner surface opposite the outer surface that is flush with the outer bottom surfaces 11d and 12d. The shapes of the other components of the present embodiment are the same as those of the first embodiment.

An object of the present invention is to prevent the reverberations of vibrations created by piezoelectric devices disposed in respective tubular containers comprising an integral housing from affecting each other. Therefore, in the housing configuration described above, two tubular containers are connected to each other at a position where the amount of displacement caused by vibrations is smallest. In addition, varying the drive frequency of the piezoelectric devices 51a and 51b from the resonant frequency of the connecting part 33 is further preferable in that it can prevent the vibrations from easily transmitted. These frequencies can be varied by modifying the shape of the connecting part 33, for example, by forming a recessed portion, as shown in Fig. 7, or conversely, a raised portion in the connecting part 33. Another possible method is to adjust the thickness or length of the connecting part.

### (Third Embodiment)

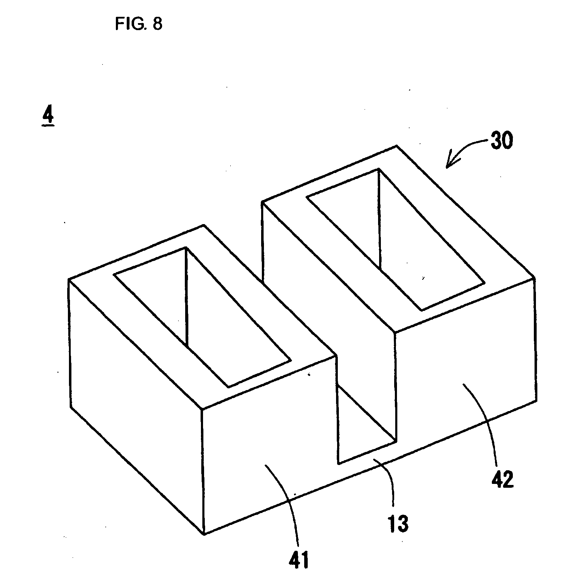

Fig. 8 is an external perspective view of an ultrasonic sensor according to the third embodiment of the present invention, as viewed from openings. Fig. 9 is a front view of an ultrasonic sensor 4. The ultrasonic sensor 4 of the present embodiment differs from the ultrasonic sensor 1 of the first embodiment in terms of the thickness of side parts of tubular containers. The shapes of the other components are the same as those of the first embodiment.

The ultrasonic sensor 4 of the present embodiment includes rectangular tubular containers 41 and 42 whose respective side parts are not uniform in thickness. In the tubular containers 41 and 42, the thickness C of a side portion connected to the connecting part is greater than the thickness D of a side portion orthogonal to the side portion connected to the connecting part. Specifically, the distance from the outer edge of each of outer bottom surfaces 41d and 42d, which are rectangular in outline, to the outer edge of each of inner bottom surfaces 41e and 42e, in other words, the thickness of each side portion adjacent to the connecting part 13 is consistently greater than the thickness D, regardless of the position of a contact point 14 along a line between a side portion and the connecting part 13 (i.e., thickness C1 = C = C2 > D). Vibrations of the housing caused by the drive of the piezoelectric devices 51a and 51b are large in thinner portions of the side parts, while small in thicker portions of the side parts. Therefore, a configuration in which the thickness of a side portion adjacent to the connecting part 13 is greater than the thickness of a side portion distant from the connecting part 13 can further reduce the effects of vibrations and thus is preferable.

Although, in the present embodiment, each opening of the housing comprised of the tubular containers is rectangular in shape, the present invention is not limited to this. For example, each opening may be circular in shape. Likewise, the shape of each piezoelectric device, which is circular in the present embodiment, is not limited to this, and may be rectangular.

Although it is preferable that the tubular containers are connected to the connecting part at side portions closest to the bottom parts, the connecting position of the connecting part may be slightly shifted toward the openings to form a gap.

Moreover, the number of tubular containers is not limited to two. For example, the present invention is also applicable to a housing configuration in which three tubular containers are connected through two connecting parts.

Moreover, filling the tubular containers with elastic members causes virtually no interference with the vibrations of the housing and thus does not damage the effects of the present invention.

## Claims

1. An ultrasonic sensor (1, 2, 3, 4) comprising an integral housing (10, 20, 30) including a plurality of tubular containers (11, 12, 41, 42) that are open at one end and closed by bottom parts at the other end and have side parts extending from the one end to the other end, and at least one connecting part (13, 33) that connects the plurality of tubular containers; and piezoelectric devices (51a, 51b) disposed on respective inner bottom surfaces (11e, 12e, 41e, 42e) of the respective bottom parts (11c, 12c) of the plurality of tubular containers (11, 12, 41, 42),
wherein, in the housing, the side parts (11b, 12b) of the plurality of tubular containers are connected to each other, through the connecting part (13, 33), at portions adjacent to the bottom parts of the tubular containers, with outer bottom surfaces (11d, 12d, 41d, 42d) of the respective bottom parts of the plurality of tubular containers being flush with each other, and
the housing further comprises an elastic member (54) that supports the housing (10, 20, 30),
wherein in each of the tubular containers, the thickness (C, C1, C2) of a side portion facing toward another tubular container (41, 42) connected through the connecting part is greater than the thickness (D) of a side portion orthogonal to the side portion facing toward the another tubular container (41, 42).

2. The ultrasonic sensor according to Claim 1, wherein the resonant frequency of the connecting part (13, 33) differs from the drive frequency of the piezoelectric devices (51a, 51b).

3. The ultrasonic sensor according to Claim 2, wherein the outline of the outer bottom surface (11d, 12d, 41d, 42d) of each of the tubular containers is polygonal.

4. The ultrasonic sensor according to any one of Claims 1 to 3, wherein the outer bottom surfaces (11d, 12d, 41 d, 42d) of the plurality of tubular containers and an outer surface of the connecting part (13, 33) form a single flat surface.

## Patentansprüche

1. Ultraschallsensor (1, 2, 3, 4) mit einem integralen Gehäuse (10, 20, 30) mit mehreren röhrenartigen Behältern (11, 12, 41, 42), die an einem Ende geöffnet und an den unteren Teilen durch Bodenteile geschlossen sind und Seitenteile aufweisen, die sich von dem einen Ende zu dem anderen Ende erstrecken, und zumindest einem Verbindungsteil (13, 33), welches die mehreren tubularen Behälter verbindet; und piezoelektrischen Einheiten (51 a, 51b), die an entsprechenden inneren Bodenflächen (11e, 12e, 41e, 42e) der entsprechenden Bodenteile (11c, 12c) der mehreren tubularen Behälter (11, 12, 41, 42) angeordnet sind,
wobei in dem Gehäuse die Seitenteile (11b, 12b) der mehreren tubularen Behälter miteinander verbunden sind über das Verbindungsteil (13, 33) an Positionen, die benachbart sind zu den Bodenteilen der tubularen Behälter, wobei äußere Bodenoberflächen (11d, 12d, 41 d, 42d) der entsprechenden Bodenteile von den mehreren tubularen Behältern bündig zueinander angeordnet sind, und
wobei das Gehäuse weiter ein elastisches Element (54) aufweist, welches das Gehäuse (10, 20, 30) hält,
wobei in jedem der tubularen Behälter die Dicke (C, C1, C2) eines Seitenabschnittes, der einem anderen tubularen Behälter (41, 42) zugewandt ist, des über das Verbindungsteil verbunden ist, größer ist als die Dicke (D) eines Seitenabschnittes, der orthogonal ist zu einem Seitenabschnitt, der einem anderen tubularen Behälter (41, 42) zugewandt ist.

2. Ultraschallsensor nach Anspruch 1, wobei die Resonanzfrequenz des Verbindungsteils (13, 33) unterschiedlich ist von der Betriebsfrequenz des piezoelektrischen Einheit (51a,51b).

3. Ultraschallsensor nach Anspruch 2, wobei die Kontur der äußeren Bodenfläche (11d, 12d, 41d, 42d) von jedem der tubularen Behälter polygonal ist.

4. Ultraschallsensor nach einem der Ansprüche 1 bis 3, wobei die äußeren Bodenflächen (11d, 12d, 41d, 42d) der mehreren tubularen Behälter und eine äußere Oberfläche des Verbindungsteils (13, 33) eine einzige flache Oberfläche bilden.

## Revendications

1. Capteur ultrasonore (1, 2, 3, 4) comprenant un logement intégré (10, 20, 30) incluant une pluralité de récipients tubulaires (11, 12, 41, 42) qui sont ouverts à une extrémité et fermés par des éléments inférieurs à l'autre extrémité et présentent des éléments latéraux s'étendant d'une extrémité à l'autre extrémité, et au moins un élément de liaison (13, 33) qui relie la pluralité de récipients tubulaires ; et des dispositifs piézoélectriques (51a, 51b) disposés sur des surfaces inférieures internes respectives (11e, 12e, 41e, 42e) des éléments inférieurs respectifs (11c, 12c) de la pluralité de récipients tubulaires (11, 12, 41, 42),
dans lequel, dans le logement, les éléments latéraux (11b, 12b) de la pluralité de récipients tubulaires sont reliés les uns aux autres, par le biais de l'élément de liaison (13, 33), au niveau de parties adjacentes aux éléments inférieurs des récipients tubulaires, les surfaces inférieures externes (11d, 12d, 41d, 42d) des éléments inférieurs respectifs de la pluralité de récipients tubulaires étant en affleurement les uns avec les autres, et
le logement comprend en outre un organe élastique (54) qui supporte le logement (10, 20, 30),
dans lequel, dans chacun des récipients tubulaires, l'épaisseur (C, C1, C2) d'une partie latérale faisant face à un autre récipient tubulaire (41, 42) relié par le biais de l'élément de liaison, est supérieure à l'épaisseur (D) d'une partie latérale orthogonale à la partie latérale faisant face à l'autre récipient tubulaire (41, 42).

2. Capteur ultrasonore selon la revendication 1, dans lequel la fréquence de résonance de l'élément de liaison (13, 33) diffère de la fréquence d'entraînement des dispositifs piézoélectriques (51a, 51b).

3. Capteur ultrasonore selon la revendication 2, dans lequel le contour de la surface inférieure externe (11d, 12d, 41d, 42d) de chacun des récipients tubulaires est polygonal.

4. Capteur ultrasonore selon l'une quelconque des revendications 1 à 3, dans lequel les surfaces inférieures externes (1d, 12d, 41d, 42d) de la pluralité de récipients tubulaires et une surface externe de l'élément de liaison (13, 33) forment une seule surface plane.
